# EUROPÄISCHE PATENTSCHRIFT

(11) **EP 0 536 656 B1**
(45) Veröffentlichungstag und Bekanntmachung des Hinweises auf die Patenterteilung: **03.05.2000**
(21) Anmeldenummer: 92116906.6
(22) Anmeldetag: 02.10.1992
(51) Int. Cl.: G01N 21/81, G01D 5/26

(54) **Feuchtesensor**
Humidity sensor
Capteur d'humitidé

(30) Priorität: 05.10.1991 DE 4133126
(43) Veröffentlichungstag der Anmeldung: 14.04.1993
(73) Patentinhaber: BARTEC Componenten und Systeme GmbH, 97980 Bad Mergentheim (DE)
(72) Erfinder: Schwotzer, Günter, O-6902 Jena (DE); Uhlig, Heinz, O-6902 Jena (DE)
(74) Vertreter: Pfeiffer, Rolf-Gerd, Dipl.-Phys.

(56) Entgegenhaltungen:
- WO-A-83/02327
- DE-A- 3 832 185
- FR-A- 2 477 286
- FR-A- 2 594 951
- US-A- 4 946 275
- SPIE Band 514: Proceedings 2nd International Conference on Optical Fibre Sensors, Stuttgart, DE, 5-7 September 1984, Seiten 111-116 M.C. HUTLEY: 'Wavelength encoded optical fibre sensors'
- Proceedings 1st International Conference on Optical Fiber Sensors, London, GB, 26-28 April 1983, Seiten 122-126 E.R. COX et al: 'Fibre-optic colour sensors based on Fabry-Perot Interferometry'

## Beschreibung

### Stand der Technik

Es ist seit längerem bekannt, daß optische Schichtsysteme, bestehend aus einer oder mehreren dielektrischen Einzelschichten, deren Dicke jeweils ungefähr ein Viertel oder ein Halbes der Wellenlänge des Meßlichtes (λ/4, λ/2) beträgt, porös sind und durch Wasserabsorption ihre Reflexions- und Transmissionseigenschaften ändern, wenn sich der Feuchtegehalt der sie umgebenden Luft ändert (vgl. z.B. H. Koch: "Optische Untersuchungen zur Wasserdampfsorption in Aufdampfschichten"; phys. stat. sol., 12 (1965) 533-43). Bei Systemen aus Vielfachschichten ist dieser Effekt deutlicher als bei einer Einfachschicht.

In DE 36 19 017 wird vorgeschlagen, diesen Effekt für einen optisch dielektrischen Feuchtigkeitsmesser zu nutzen. Dazu wird ein solches Schichtsystem auf einen durchscheinenden Träger aufgebracht, der so entstehende teildurchlässige Spiegel in einen optischen Strahlengang schmalbandigen polarisierten Licht gebracht und durch Quotientenbildung aus den in Abhängigkeit von der Feuchteaufnahme sich ändernden reflektierten und durchgelassenen Lichtintensitäten ein feuchteabhängiges Meßsignal gebildet. Nach einer solchen Anordnung sind keine kleinen, kompakten und stabilen Feuchtigkeitsmesser bzw. -sensoren herstellbar.

In DE 38 32 185 C2 wird deshalb vorgeschlagen, das poröse und feuchtigkeitsempfindliche Vielfachschichtsystem als interferometrische Anordnung unmittelbar auf einer Oberfläche bzw. der Schnittfläche einer optischen Faser aus Glas oder Kunststoff anzuordnen. Diese Anordnung ermöglicht zwar extrem kleine Meßsondenabmessungen hat aber den Nachteil, daß die mögliche hohe Feuchteempfindlichkeit der interferometrischen Schichtanordnung meßtechnisch nur unbefriedigend genutzt werden kann, weil die in mehrmodigen Lichtleitfasern geführten Lichtmoden in einem großen Winkelbereich auf die feuchteempfindliche Schicht auftreffen und somit die spektrale Filtercharakteristik der Schicht verfälscht und abgeflacht wird. Desweiteren ist der feuchteempfindliche Meßbereich bzw. die Meßempfindlichkeit durch die Wahl der optischen Eigenschaften des Schichtsystems in Verbindung mit der Wahl des Fasertyps und der Wellenlänge des verwendeten Meßlichtes für die praktische Anwendung oftmals einschränkend festgelegt und kann -im Sinne einer Optimierung von Meßbereich und Empfindlichkeit- nicht mehr variiert werden.

### Beschreibung

Der Erfindung liegt die Aufgabe zugrunde, einen Feuchtesensor unter Anwendung von Lichtleitfasern und Interferenzschichtbauelementen anzugeben, der sich kompakt und klein herstellen läßt, über einen großen auch varierbar einstellbaren Meßbereich verfügt, die Nachteile des Standes der Technik behebt und sich kostengünstig in großen Stückzahlen unter Kontrolle des Herstellungsprozesses fertigen läßt. Die Aufgabe wird durch die in den Kennzeichen der Patentansprüche angegebenen Mittel gelöst. Erfindungswesentlich ist dabei die Anbringung eines optisch durchlässigen Bauelementes, an das ein oder mehrere Interferenzschichtsysteme angebunden sind, an eine Lichtleitfaser bzw. mehrere Lichtleitfasern.

Die Erfindung soll im nachstehenden anhand mehrerer Ausführungsbeispiele näher erläutert werden. Dabei zeigen:
- Fig. 1: eine mögliche einfache Ausführungsform der Erfindung,
- Fig. 2: eine charakteristische Abhängigkeit des empfangenen Lichtes von der Dicke des optisch transparenten Bauteils,
- Fig. 3: einen Feuchtesensor mit einer Stablinse als Träger von Interferenzschichten,
- Fig. 4: einen Feuchtesensor mit einer Gradientenlinse als Träger von Interferenzschichten,
- Fig. 5: eine erfindungsgemäße Anpassung der feuchteempfindlichen Interferenzschicht an das Emissionsspektrum der verwendeten Lichtquelle und
- Fig. 6: eine zeilenförmige Anordnung von mehr als zwei Lichtleitfasern an den erfindungsgemäßen Feuchtesensor.

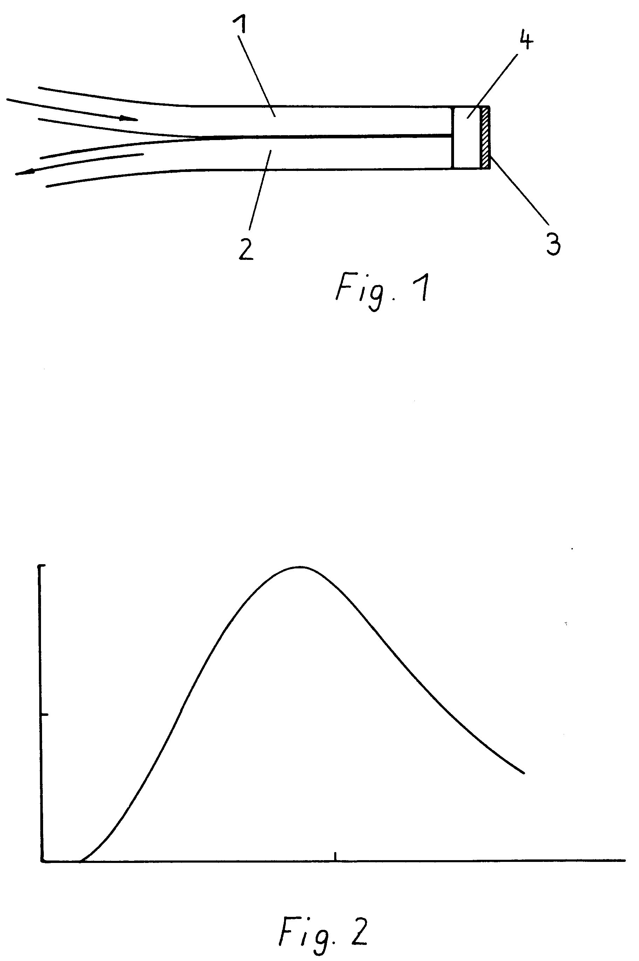

In Fig. 1 ist ein Feuchtesensor beschrieben, bei dem die Enden zweier Lichtleitfasern 1 und 2 in einer gemeinsamen Hülse geeignet gefaßt und fixiert sind. Das feuchteempfindliche reflektierende Interferenzschichtsystem 3 ist auf ein optisch transparentes Bauelement, im folgenden Substrat 4 genannt, einer Dicke d aufgebracht. Das Substrat 4 ist mit den Lichtleitfaserenden so kontaktiert (verklebt), daß im wesentlichen die Dicke d den Abstand zwischen den Faserenden und dem feuchteempfindlichen Interferenzschichtsystem 3 bestimmt. Die Lichtleitfaser 1 kann mit einer geeigneten Lichtquelle versehen als Beleuchtungsfaser für das reflektierende Schichtsystem 3 und die Lichtleitfaser 2 mit einem Detektor versehen als Empfangsfaser für einen durch die Anordnung vorgegebenen Teil des am Schichtsystem 3 reflektierten Lichtes, der von dem durch die Feuchte der Umgebung beeinflußten Reflexionsgrad des Interferenzschichtsystems 3 abhängt, dienen.

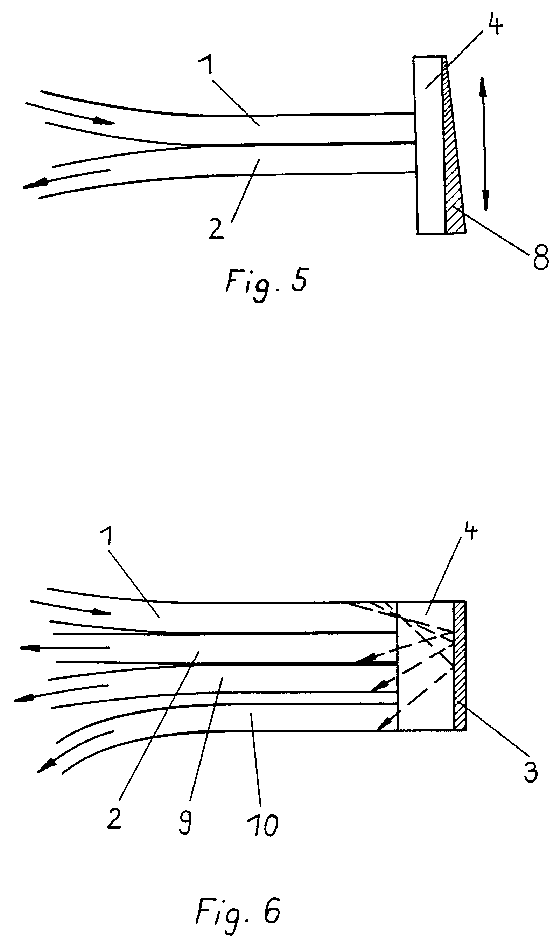

Zur Festlegung des Abstandes d zwischen den Enden der Lichtleitfasern 1 und 2 und dem reflektierenden Schichtsystem 3 wird die Kenntnis der Abhängigkeit des von der Lichtleitfaser 2 empfangenen Teiles des an der Schicht 3 reflektierten Lichtes vom Abstand d bei vorgegebenen Lichtleitfaserparametern wie Durchmesser, numerische Apertur, Neigung und Abstand der Lichtleitfasern zueinander benötigt. Die Figur 2 zeigt eine charakteristische Abhängigkeit der empfangenen Lichtintensität vom Abstand d. Das empfangene Signal besitzt immer ein Maximum bei einem bestimmten Abstand d zwischen den Faserendflächen und der reflektierenden Schicht, dessen Lage von den genannten Parametern abhängt. Im Beispiel sind zwei parallel angeordnete Lichtleitfasern mit einem Durchmesser von 0,2mm, einer numerischen Apertur von 0,22 und einem Abstand der Faserachsen an den Faserenden von 0,24mm eingesetzt. Der durch die Schichtdicke d gewahrleistete Abstand d ist hier mit 0,9mm festgelegt. Die Rolle der Fasern 1 und 2 ist vertauschbar. Es können zur Erhöhung der Lichtausbeute auch mehrere Fasern, z.B. aus einem oder mehreren Bündeln zusammengesetzt, eingesetzt werden. Auch sind konzentrische Faseranordnungen einsetzbar. Bei gegebenen Faserparametern kann der günstigste Abstand d durch Veränderung des Abstandes zwischen den Fasern und/oder durch Neigen der Fasern zueinander verändert werden. Damit ergibt sich die Möglichkeit, die Faseranordnung einer gegebenen Substratdicke d anzupassen oder bei vorgegebener Wellenlänge des Meßlichtes eine optimale Anpaßung an die wellenlängenspezifische Reflexionscharakteristik der Interferenzschicht 3 zu erreichen, da die spektrale Reflexionscharakteristik eines Interferenzschichtsystems vom Einfallswinkel des Lichtes abhängt. Anstelle der Veränderung des Abstandes zwischen zwei Fasern kann z. B. auch eine zeilenförmige Anordnung von mehr als zwei Fasern, wie in Fig. 6 dargestellt eingesetzt werden. Faser 1 soll hierbei wiederum als Beleuchtungsfaser eingesetzt sein, während die Fasern 2, 9, 10 usw. mit wachsendem Abstand zu Faser 1 als Empfangsfasern dienen. Das von jeder einzelnen der Empfangsfasern empfangene Licht trifft unter einem anderen, im wesentlichen durch die Geometrie festgelegten Winkel auf die Interferenzschicht 3 und erfährt deshalb eine definiert andere spektrale Beeinflussung durch die Interferenzschicht. Die Rolle der Beleuchtungs- und Empfangsfasern kann natürlich auch hier vertauscht werden. Im Beispiel der Figur 6 kann es insbesondere vorteilhaft sein, an die Fasern 2, 9 und 10 Lichtquellen mit unterschiedlichen aber dennoch an die spektrale Reflexionscharakteristik angepaßten spektralen Emissionscharakteristika anzuschließen. Durch eine geeignete (z.B. Modulieren der einzelnen Lichtquellen mit unterschiedlichen Frequenzen oder durch zeitliches Takten) zeitliche Modulierung der einzelnen Lichtquellen und einer dieser Modulierung zeitlich zugeordneten Auswertung der Empfangssignale aus Faser 1 kann der Feuchtesensor in beliebigen Feuchtigkeitsmeßbereichen mit optimaler optischer Empfindlichkeit betrieben werden.

Eine Anordnung, die vorteilhaft eine Anpassung der spektralen Charakteristik der Interferenzschicht an das Emissionsspektrum der verwendeten Lichtquelle erlaubt, ist in Fig. 5 dargestellt. In diesem Fall ist die Interferenzschicht 8 keilförmig, z.B. ähnlich einem Verlaufsfilter, ausgelegt. Durch deren seitliches Verschieben relativ zu den Endflächen der Fasern 1 und 2 kann hierdurch die zum Emissionsspektrum der Lichtquelle passende Stelle der Interferenzschicht gefunden werden.

In allen Beispielen wird gegenüber dem Fall unmittelbar beschichteter Faserenden eine wesentliche Verbesserung der Empfindlichkeit bzw. Meßstabilität erzielt, weil durch die erfindungsgemäßen Vorrichtungen der für die Messung maßgebliche Aperturwinkelbereich des Lichtes wesentlich verringert ist und der Einfluß von unvermeindlichen Änderungen der Modenverteilung des Lichtes in den Faserleitungen minimiert wird.

Eine weitere erfindungsgemäße Vorrichtung ist dergestalt, daß nur eine einzige Lichtleitfaser sowohl als Beleuchtungs- als auch Empfangsfaser eingesetzt ist und als Maßnahme zur wirksamen Verringerung der Apertur des Meßlichtes ein die Interferenzschicht tragendes Bauelement der Dicke d an der Endfläche der Lichtleitfaser in optischen Kontakt gebracht ist. Vorteilhafterweise ist in diesem Fall das die Interferenzschicht tragende Bauelement so gestaltet, daß es optisch abbildende Eigenschaften besitzt. Das soll an Hand der folgenden Beispiele erläutert werden.

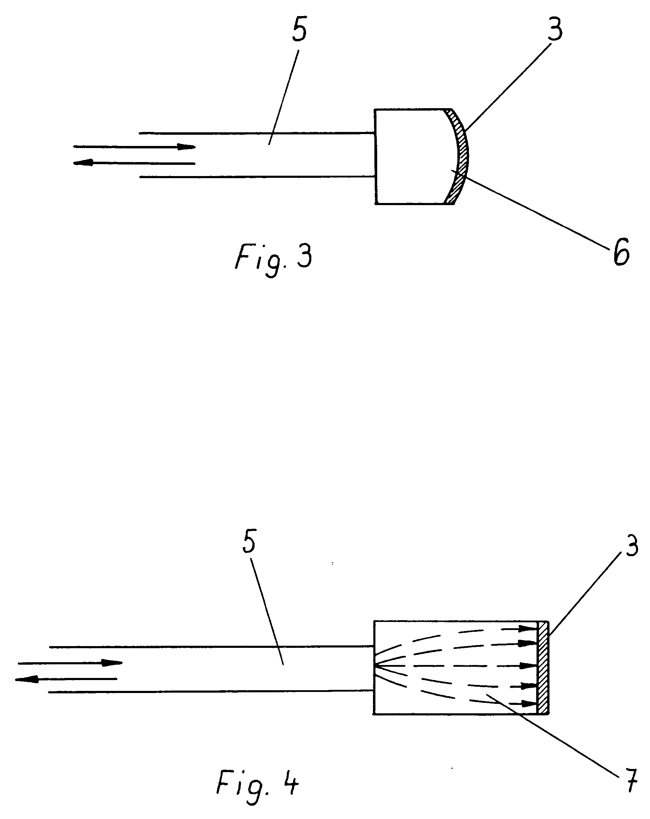

Beispielsweise besitzt gemäß Fig. 3 das Substrat 6 eine Fläche in Form einer Halbsphäre, die das feuchteempfindliche Interferenzschichtsystem 3 trägt und eine ebene Fläche, an welche die Endfläche der Lichtleitfaser 5 optisch über eine nicht näher dargestellte feste bzw. flüssige Immersion kontaktiert ist. Als optisches Bauelement kann in diesem Beispiel eine Stablinse gewählt sein.

In einem anderen Beispiel nach Fig. 4 dient als Substrat eine Gradientenlinse 7, deren eine Endfläche die feuchteempfindliche Interferenzschicht 3 trägt und deren andere Endfläche an die Lichtleitfaser 5 kontaktiert ist. Zweckmäßigerweise ist die Gradientenlinse in diesem Fall eine 1/4-Pitch-GRIN-Linse.

Im Bedarfsfall kann das optische Bauelement (z.B. 4 in Fig. 1) so ausgelegt sein, daß es selbst eine optische Filterfunktion besitzt, die vorteilhafterweise feuchteunabhängig sein sollte. Es kann ein Farbglas oder eine Kombination von Farbgläsern mit optischer Bandpaßfilterfunktion (Kanten-, Schmalband- bzw. Breitbandfilter) sein, die der spektralen Reflexionscharakteristik der feuchteempfindlichen Schicht angepaßt sind. In einem solchen Fall können an Stelle der sonst eingesetzten schmalbandigen Lichtquellen (z.B. Halbleiterlaser) breitbandige Lichtquellen (z.B. LED oder Temperaturstrahler) verwendet werden.

Eine ähnliche Wirkung erzielt man, wenn auf die mit der oder den Lichtleitfasern in Kontakt zu bringenden Flächen des optischen Bauelements ein zweites optisches Interferenzschichtsystem aufgebracht ist, welches z.B. durch Verklebung mit der oder den Lichtleitfasern von Feuchteeinwirkungen geschützt ist und welches bezüglich seiner optischen Transmissionscharakteristik an die Reflexionscharakteristik des der zu messenden Feuchte ausgesetzten Interferenzschichtsystems angepaßt ist. Eine solcher Einsatz zweier Interferenzschichtsysteme kann in erfindungsgemäßer Weise auch für eine passive Eliminierung oder auch meßtechnische Trennung von temperaturbedingten Änderungen der Reflexionscharakteristik der feuchteempfindlichen Schicht genutzt werden, da bekanntlich optische Interferenzschichtsysteme ähnlicher Schichtstruktur nahezu die gleiche (wenn auch relativ kleine) Temperaturempfindlichkeit aufweisen, die sich bei steigender Temperatur in einer Verschiebung der Transmissions- bzw. Reflexionsspektren zu kleineren Lichtwellenlängen äußert und die der feuchteabhängigen Verschiebung somit im allgemeinen überlagert ist. Bei diesen vorgeschlagenen Vorrichtungen wird das Meßlicht in den Temperatureinfluß kompensierender Weise (bei Einsatz genügend breitbandiger Lichtquellen) bzgl. seiner spektralen Charakteristik verschoben, bzw. bzgl. seiner Intensität (bei Einsatz schmalbandiger Lichtquellen mit einer Emissionslinie) nachgeregelt.

Je nach Ausführung des Feuchtesensors gemäß der Erfindung, sind mit ihm noch Feuchteänderungen bis herunter auf 0,1% im Bereich relativer Feuchte von Null bis mindestens 90% registrierbar.

Selbstverständlich ist die Erfindung nicht auf die Verwendung einzelner Lichtleitfaser beschränkt, so können auch Lichtleitfaserbündel und mehrere Lichtquellen zum Einsatz gelangen.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszahlenliste

- 1,2,5,: - Lichtleitfaser
- 9,10:
- 3: - Interferenzschichtsystem
- 4: - ebenes Substrat
- 6: - Stablinse (als Substrat)
- 7: - Gradientenlinse (als Substrat)
- 8: - keilförmiges Interferenzschichtsystem

## Patentansprüche

1. Feuchtesensor bestehend aus wenigstens einer Lichtleitfaser (1) und wenigstens einer Interferenzschichtanordnung (3), dadurch gekennzeichnet, daß die stirnseitige Endfläche der wenigstens einen Faser mit einem plättchenförmigen Bauelement (4) verbunden ist und auf diesem Bauelement eine Feuchte aufnehmende Interferenzschichtanordnung (3) mit optischer Wirkrichtung auf die stirnseitige Faserendfläche angebracht ist, wobei die Dicke des plättchenförmigen Bauelements so festgelegt ist, daß der von der Interferenzschichtanordnung reflektierte Anteil des Lichtes bei vorgegebenen Lichtleitfaserparametern wie Durchmesser, numerische Apertur, und bei Einsatz mehrerer Lichtleitfasern durch Neigung und Abstand der Lichtleitfasern ein Maximum aufweist.

2. Feuchtesensor nach Anspruch 1., dadurch gekennzeichnet, daß das optische Bauelement (4) einen Brechungsindex in der Größenordnung dem der Lichtleitfaser (1) aufweist.

3. Feuchtesensor nach Anspruch 1. und 2., dadurch gekennzeichnet, daß der Brechungsindex des optischen Bauelementes (4) bevorzugt gleich oder größer dem der Lichtleitfaser (1) ist.

4. Feuchtesensor nach Anspruch 1. und 2. bzw. 3., dadurch gekennzeichnet, daß das optische Bauelement (4) durch ein Glas- bzw. Polymerplättchen gebildet ist.

5. Feuchtesensor nach Anspruch 1. und 2. und 4., dadurch gekennzeichnet, daß dem Glas- bzw. Polymerplättchen eine Dicke in der Größenordnung von 1 mm gegeben ist.

6. Feuchtesensor nach Anspruch 1. und (2. bzw. 3.), dadurch gekennzeichnet, daß das optische Bauelement (4) durch einen am faserendabseitigen Ende konvex ausgebildeten stabförmigen Körper (6) gebildet ist, dessen Länge so bemessen ist, daß die Lichtleitfasern im Krümmungsmittelpunkt der konvex ausgebildeten Fläche befestigbar sind.

7. Feuchtesensor nach Anspruch 1. und (2. bzw. 3.), dadurch gekennzeichnet, daß das optische Bauelement (4) durch eine Plankonvexlinse, z.B. Kugellinsenhälfte, gebildet ist.

8. Feuchtesensor nach Anspruch 1. und (2. bzw. 3.), dadurch gekennzeichnet, daß das optische Bauelement (4) durch eine GRIN-Linse (7) gebildet ist.

9. Feuchtesensor nach Anspruch 1., dadurch gekennzeichnet, daß die Verbindung des optisch durchlässigen Bauelementes (4) mit der Lichtleitfaser (1) über eine flüssige oder feste Immersion erfolgt.

10. Feuchtesensor nach Anspruch 1., dadurch gekennzeichnet, daß die Interferenzschichtanordnung (3) aufgeteilt ist in eine Feuchte aufnehmende und eine gegen Feuchte hermetisierte.

11. Feuchtesensor nach Anspruch 1. und 10., dadurch gekennzeichnet, daß die beiden Interferenzschichtanordnungen durch das optische Bauelement getrennt auf dessen in Achsrichtung zur Lichtleitfaser liegenden Begrenzungsflächen angeordnet sind, wobei die Feuchte aufnehmende Interferenzschicht am weitesten von der Lichtleitfaserendfläche beabstandet ist.

12. Feuchtesensor nach Anspruch 1. und einem der vorstehenden Ansprüche, dadurch gekennzeichnet, daß bei planer Ausführung der die Feuchte aufnehmenden Interferenzschichtanordnung tragenden Endfläche, die Interferenzschichtanordnung (8) keilförmig ausgebildet ist.

13. Feuchtesensor nach einem der vorstehenden Ansprüche, dadurch gekennzeichnet, daß das optische Bauelement (4) als Kantenfilter ausgebildet ist.

14. Feuchtesensor nach einem der vorstehenden Ansprüche, dadurch gekennzeichnet, daß das optische Bauelement als Schmalbandfilter ausgebildet ist.

15. Feuchtesensor nach einem der vorstehenden Ansprüche, dadurch gekennzeichnet, daß das optische Bauelement als Breitbandfilter ausgebildet ist.

## Claims

1. Humidity sensor comprising at least one light conducting fiber (1) and at least one interference layer arrangement (3), characterized in that the leading face of the at least one fiber is connected to a lamina-like component (4) and an interference layer arrangement (3) adapted for receiving humidity is provided upon said component, the optical active direction of said interference layer arrangement being towards said leading face of the fiber, wherein the thickness of said lamina-like component is so selected that the portion of the light reflected upon the interference layer arrangement is a maximum, at given light conducting fiber parameters such as diameter, numerical aperture and, provided that a plurality of light conducting fibers is employed, by the inclination of and the distance between the light conducting fibers.

2. Humidity sensor as claimed in claim 1, characterized in that the optical component (4) exhibits a refractive index in the order size of that of the light conducting fiber (1).

3. Humidity sensor as claimed in claims 1 and 2, characterized in that the optical component (4) exhibits a refractive index which preferably is equal to or greater than that of the light conducting fiber (1).

4. Humidity sensor as claimed in claims 1 and 2, respectively 3, characterized in that the optical component (4) is embodied by a glass lamina and polymer lamina, respectively.

5. Humidity sensor as claimed in claims 1, and 2, and 4, characterized in that the glass lamina and the polymer lamina, respectively, has a thickness in the order of size of 1 mm.

6. Humidity sensor as claimed in claims 1 and (2 and 3, respectively), characterized in that the optical component (4) consists of a convex and rod-shaped body (6) formed at the remote end of the fiber, the length of the former being so dimensioned that the light conducting fibers is adapted to be secured to the center of curve of the convex face.

7. Humidity sensor as claimed in claims 1 and (2 and 3, respectively), characterized in that the optical component (4) consists of a planoconvex lens, for example, the half of a spherical lens.

8. Humidity sensor as claimed in claims 1 and (2 and 3, respectively), characterized in that the optical component (4) is a GRIN-lens (7).

9. Humidity sensor as claimed in claim 1, characterized in that the connection of the optically transmissive component (4) to the light conducting fiber (1) is established via a liquid or a solid immersion.

10. Humidity sensor as claimed in claim 1, characterized in that said interference layer arrangement (3) is split into a humidity receiving one and into one sealed against humidity.

11. Humidity sensor as claimed in claims 1 and 10, characterized in that the two interference layer arrangements, being separated by the optical component, are arranged upon those limiting faces of said component which are in axial direction to the light conducting fiber, wherein the humidity receiving interference layer is most remotely spaced from the end face of the light conducting fiber.

12. Humidity sensor as claimed in claim 1 and one of the preceding claims, characterized in that when the end face supporting the humidity receiving interference layer arrangement is of plane design, the interference layer arrangement (8) is of wedge-shape.

13. Humidity sensor as claimed in one of the preceding claims, characterized in that the optical component (4) is embodied as an edge filter.

14. Humidity sensor as claimed in one of the preceding claims, characterized in that the optical component is embodied as a narrow-band filter.

15. Humidity sensor as claimed in one of the preceding claims, characterized in that the optical component is embodied as a broad-band filter.

## Revendications

1. Le capteur d'humidité comprenant au moins une fibre optique (1) et muni d'au moins une couche interférentielle (3) se caractérise par le fait que la face frontale d'au moins une fibre optique est en contact avec un composant en forme de plaquette (4) sur lequel une couche interférentielle (3) absorbant l'humidité est appliquée de sorte que son effet optique soit orienté sur l'extrémité frontale de la fibre ; l'épaisseur du composant en forme de plaquette étant dimensionnée de façon à ce que la part de la lumière reflétée par la couche interférentielle pour les fibres optiques aux paramètres prédéterminés tels que le diamètre, l'ouverture numérique et en cas d'utilisation de plusieurs fibres optiques, l'inclinaison et l'écart des fibres optiques, soit la plus grande possible.

2. Le capteur d'humidité selon la revendication 1 se caractérise par le fait que l'indice de réfraction du composant optique (4) est identique à celui de la libre optique (1).

3. Le capteur d'humidité selon les revendications 1 et 2 se caractérise par le fait que l'indice de réfraction du composant optique (4) est de préférence égal ou supérieur à l'indice de réfraction de la libre optique (1).

4. Le capteur d'humidité selon les revendications 1 et 2 ou encore 3 se caractérise par le fait que le composant optique (4) est constitué par une plaquette en polymère ou en verre.

5. Le capteur d'humidité selon les revendications 1 et 2 et 4 se caractérise par le fait que l'épaisseur de la plaquette en polymère ou en verre est de l'ordre de 1 mm.

6. Le capteur d'humidité selon les revendications 1 et (2 ou 3) se caractérise par le fait que le composant optique (4) est un corps en forme de barre (6) dont la face opposée à l'extrémité de la libre est de forme convexe avec la longueur dimensionnée de sorte que les fibres optiques puissent être fixées au centre de la courbure de la face convexe.

7. Le capteur d'humidité selon les revendications 1 et (2 ou 3)se caractérise par le fait que le composant optique (4) est constitué par une lentille de forme plan-convexe, par ex. par une lentille hémisphérique.

8. Le capteur d'humidité selon les revendications 1 et (2 ou 3) est caractérisé par le fait que le composant optique (4) est constitué d'une lentille GRIN (7).

9. Le capteur d'humidité selon la revendication 1 se caractérise par le fait que le raccord entre le composant transparent d'un point de vue optique (4) et la fibre optique (1) est réalisé par immersion liquide ou solide.

10. Le capteur d'humidité selon la revendication 1 se distingue par un système multicouche interférentiel (3) composé d'une couche absorbant l'humidité et d'une couche imperméable.

11. Le capteur d'humidité selon les revendications 1 et 10 se caractérise par le fait que le composant optique sépare les deux systèmes multicouches interférentiels appliqués sur les faces périphériques disposées dans le sens axial par rapport à la libre optique, la couche interférentielle absorbant l'humidité étant la plus éloignée de l'extrémité de la libre.

12. Le capteur d'humidité selon la revendication 1 et une des revendications précédentes se caractérise par le fait que dans le cas de l'exécution plane de la face frontale servant de support au système multicouche interférentiel (8) absorbant l'humidité, la disposition des couches interférentielles appliquées (8) est cunéiforme.

13. Le capteur d'humidité selon une des revendications ci-dessus se caractérise par le fait que le composant optique (4) est un filtre à arêtes.

14. Le capteur d'humidité selon une des revendications ci-dessus se caractérise par le fait que le composant optique (4) est un filtre à bande étroite.

15. Le capteur d'humidité selon une des revendications ci-dessus se caractérise par le fait que le composant optique (4) est un filtre à large bande.
